**Europäisches Patentamt**

**European Patent Office**

**Office européen des brevets**

(19)

(11) Veröffentlichungsnummer: **0 020 694**
B1

(12) ## EUROPÄISCHE PATENTSCHRIFT

(45) Veröffentlichungstag der Patentschrift:
**23.02.83**

(21) Anmeldenummer: **80900075.5**

(22) Anmeldetag: **06.12.79**

(86) Internationale Anmeldenummer:
**PCT/EP 79/00096**

(87) Internationale Veröffentlichungsnummer:
**WO 80/01148 (12.06.80 Gazette 80/13)**

(51) Int. Cl.³: **B 29 B 1/02,** B 29 F 3/01

(54) **EINRICHTUNG ZUR STAUBFREIEN HERSTELLUNG VON KLEINEN TEILCHEN.**

(30) Priorität: **07.12.78 CH 12513/78**

(43) Veröffentlichungstag der Anmeldung:
**07.01.81 Patentblatt 81/1**

(45) Bekanntmachung des Hinweises auf die Patenterteilung:
**23.02.83 Patentblatt 83/8**

(84) Benannte Vertragsstaaten:
**DE GB LU NL**

(56) Entgegenhaltungen:
**DE-A-1 778 950**
**DE-A-1 917 195**
**FR-A-2 205 406**
**GB-A-638 992**
**US-A-3 261 056**
**US-A-3 595 533**
**US-A-3 749 375**

(73) Patentinhaber: **BUSS AG, Barfüsserplatz 6,
CH-4051 Basel (CH)**

(72) Erfinder: **FRANZ, Peter, Sonnenbergstrasse 28,
CH-4127 Birsfelden (CH)**
Erfinder: **Seipp, Hans, Muttenzerstrasse 91/2,
CH-4133 Pratteln (CH)**

(74) Vertreter: **Rottmann, Richard, Dipl.-Ing., Rottmann
Patentanwälte AG Dufourstrasse 101, CH-8008 Zürich
(CH)**

EP 0 020 694 B1

## Einrichtung zur staubfreien Herstellung von kleinen Teilchen

Die vorliegende Erfindung betrifft eine Einrichtung zur kontinuierlichen staubfreien Herstellung von kleinen Teilen mit regelmässiger Stückgrösse aus Mischungen, die nach ihrer Homogenisierung rasch hart werden. Die Einrichtung weist eine Aufbereitungsmaschine und eine örtlich getrennte Granulieranlage auf, die eine Förderschnecke und eine Lochplattendüse mit Scheidvorrichtung besitzt. Auf diesem Gebiete, welches in der Verfahrenstechnik wegen den auftretenden besonderen Schwierigkeiten und Problemen bekannt ist, wird besonders nach Verbesserungsmöglichkeiten geforscht. Insbesondere soll das Zusetzen und Verstopfen der Austrittdüse oder der Förderschnecke vermieden werden.

Staubfrei gekörnte oder granulierte Gemische mit fester, harter Struktur werden in der Technik für verschiedene Anwendungen benötigt, beispielsweise als feste Katalysatoren, als Rohstoffe für Schmelzen oder Brennvorgänge, als vorvernetzte makromolekulare Kunststoffe mit oder ohne Verstärkung, beispielsweise durch Fasern, für die Weiterverarbeitung in Pressen, als Füllstoffe für Apparate, Kolonnen oder Ummantelungen usw. Schwierigkeiten treten immer dann auf, wenn die Mischungen nach ihrer Homogenisierung rasch hart werden und die Einrichtungen dabei zusetzen und verstopfen, in denen sie stückig gemacht werden sollen. In vielen Fällen hilft man sich, indem man Zusätze beifügt, die das Hartwerden verzögern.

Aber bei manchen Mischungen sind solche Zusätze unerwünscht oder sie dürfen überhaupt nicht beigegeben werden. Anderseits werden beispielsweise bei der Homogenisierung von Katalysatormassen Zusätze gebräuchlich, welche eine fast sofortige Erstarrung herbeiführen, so dass die gekörnten Katalysatoren möglichst staubfrei gehandhabt und gebrannt werden können.

Dies ist unter anderem ganz besonders wichtig bei Massen, die mit Edelmetall-Katalysatoren versetzt sind, denn die Edelmetall Rückgewinnung aus dem Abfallstaub bedingt besonders aufwendige Prozesse.

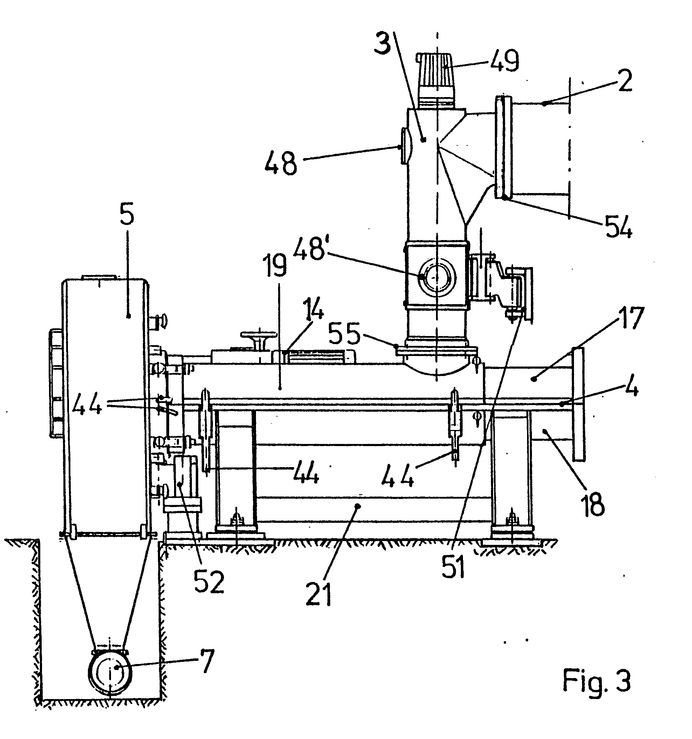

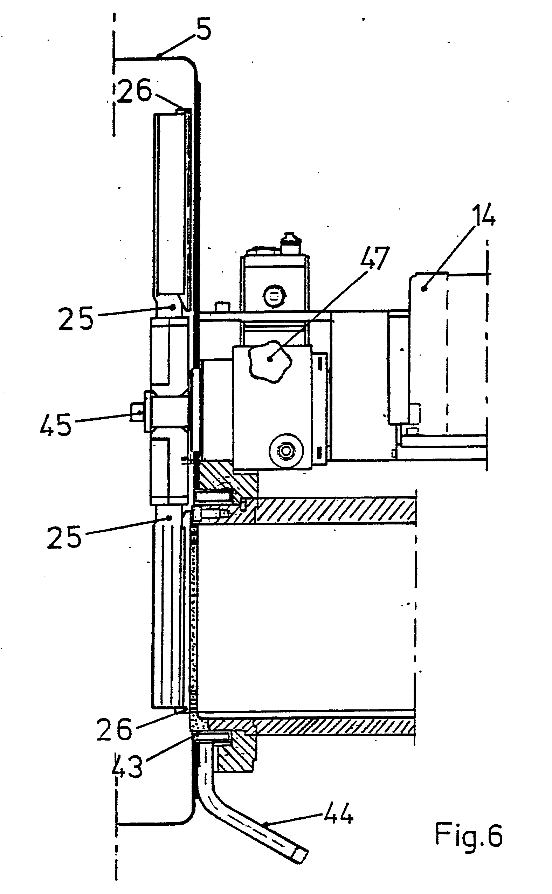

Vorschläge für die Schneckengranulierung wurden in den vergangenen 30 Jahren mehrfach gemacht, sie zeigen, wie sehr das Problem die Fachwelt beschäftigte und nach einer Lösung gesucht wurde. Moderne, aber immer noch herkömmliche Verfahren auf diesem Anwendungsgebiet wurden mehrfach beschrieben, z.B. von Schneider und Brooks in Plastics Institute Transactions, 26 (1958) Nr. 64, 117 und Timm, Stoltzenberg und Fettback in Kautschuk und Gummi, Kunststoffe 18 (1965) 206 oder von Herrmann in Plastics (Oct. 1967) 1225, Fig. 3. Die letztgenannte Veröffentlichung zeigt, wie das Material unregelmässig geformt und grossstückig die Kompoundiermaschine verlässt, und aus Fig. 6 ist ersichtlich, wie es dann gekühlt, gebrochen und feinkörnig gemahlen wird. Beim Absieben wird der Staubanteil entfernt, der bei diesen herkömmlichen Verfahren mit bis zu 30% anfällt, was bei der beschriebenen Kompoundiermaschine mit 1000 kg/h Durchsatz einen Produktionsverlust bis zu 300 kg/h darstellt, von denen günstigenfalls bis zu 10% dem Gutkorn in einem späteren Arbeitsgang für die direkte Beschickung von Formpressen zugemischt werden kann, während für Spritzgussmaschinen und Tranferform-Pressen staubfreies Granulat gewünscht wird. Der überschüssige Staubanteil kann wohl wieder als Füllstoff im Vormischer zugegeben werden, fehlt aber in der Gesamtproduktion von 1000 kg/h, von der dem Endverarbeiter nur ca. 700–800 kg verkauft werden können. Es hat daher nicht an Versuchen gefehlt, die Mischung durch eine Lochplattendüse zu treiben und durch ein umlaufendes Messer in kleine Stücke zu schneiden. Die dazu vorgeschlagenen Maschinen haben immer wieder nach kurzer Zeit zugesetzt und blockiert, so z.B. die in der CH-A-426 215 beschriebene Maschine von Gresch, der den Vorschlag machte, eine tief geschnittene Schnecke mit abnehmendem Kerndurchmesser und nur 1,35 L/D Länge bei hoher Drehzahl zu verwenden und zwischen Schneckenende und Düsenplatte einen Keilraum zu belassen, in dem das geförderte Material verdichtet wird. Auch Hermann beschreibt in seinem Buch «Schneckenmaschinen in der Verfahrenstechnik» Springer 1972, ausführlich die ZSK- oder ZDS-K Kompoundiermaschinen sowie auf S. 128 die Möglichkeit, diese mit tiefgeschnittenen, langsam laufenden Einwellmaschinen ES-A grösseren Durchmessers und 6 bis 8 L/D Länge zu kombinieren. Es folgte ein ganz kurzer Hinweis auf deren Eignung für die Granulierung duroplastischer Formmassen, aber über den erfolgreichen Einsatz auf diesem Gebiet ist nichts bekannt geworden. Das Vorgehen nach dem Patent von Gresch wurde ebenfalls aufgegeben, als sich nach ersten erfolgversprechenden Versuchen nachträglich herausstellte, dass das Verfahren für den kontinuierlichen Dauerbetrieb nicht brauchbar war.

Gemäss der Erfindung wird von einer Einrichtung gemäss dem Oberbegriff des Anspruchs 1 zur kontinuierlichen staubfreien Herstellung von kleinen Teilen mit regelmässiger Stückgrösse aus Mischungen ausgegangen, die nach ihrer Homogenisierung rasch hart werden. Eine derartige Einrichtung ist aus der DE-A-1 778 950 bekannt.

Die Einrichtung weist eine Aufbereitungsmaschine und eine örtlich davon getrennte Granulieranlage auf, die eine in einem heiz- und kühlbaren Gehäuse angeordnete, heiz- und kühlbare Förderschnecke, sowie eine Lochplattendüse mit Schneidvorrichtung besitzt, wobei die Länge L der Förderschnecke 3- bis 5mal dem Durchmesser D derselben entspricht und die Umdrehungszahl der Förderschnecke 10–25 pro Minute beträgt.

Zweck der Erfindung ist es, die Förderung der Mischung zur Lochplattendüse mit optimalen Fliesseigenschaften bei niedriger Schubspannung praktisch drucklos zu gestalten, wobei jedoch nach Verlassen der Düse die Materialoberfläche rasch verspröden soll, so dass das Granulat pneumatisch weggefördert werden kann. Dieses Ziel wird mit der Einrichtung nach der Erfindung dadurch erreicht, dass die Förderschnecke, welche eine Steigung des Schneckenganges von ca. 0,5 D aufweist und einen im Verhältnis zum Aussendurchmesser dicken Kern besitzt, in einem durch Stegleisten in Längszüge unterteilten Gehäuse angeordnet ist, in welchem die Breite der Stegleisten kleiner als die Tiefe der Längszüge ist. Weiter ist an die Granulieranlage eine Förderleitung mit Abschneider zur pneumatischen Förderung des Granulates angeschlossen und ist auch die Lochplattendüse mit Heiz- und Kühleinrichtungen versehen.

Im folgenden wird die Erfindung bespielsweise näher erläutert. Die beiliegenden Zeichnungen stellen Ausführungsbeispiele einer für das Verfahren geeigneten Einrichtung dar, und zwar zeigen:

Fig. 1 eine Anlage in Seitenansicht,

Fig. 2 eine pneumatische Fördereinrichtung für das Granulat in schematischer Darstellung,

Fig. 3 die Granulieranlage in Seitenansicht in vergrösserter Darstellung,

Fig. 4 die Anlage nach Fig. 3 von oben gesehen,

Fig. 5 eine Vorderansicht der Anlage,

Fig. 6 die Aussen-Schneidvorrichtung der Anlage als Einzelheit,

Fig. 7 einen Schnitt quer durch das Gehäuse der Förderschnecke der Granulieranlage,

Fig. 8 einen Längsschnitt durch das Gehäuse mit Düsenplatte und Schneidmesser,

Fig. 9 zeigt eine Variante zu Fig. 8 mit einer Innen-Schneidvorrichtung und

Fig. 10 einen Schneidvorgang zu Fig. 9.

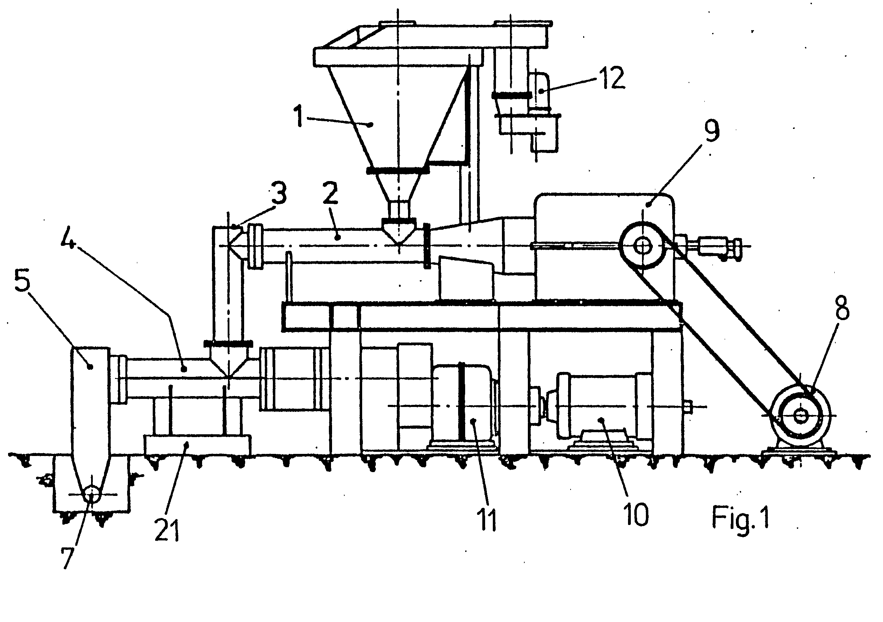

Die in der Fig. 1 schematisch dargestellte Einrichtung weist im wesentlichen eine als kontinuierlich arbeitende Misch- und Knetvorrichtung ausgebildete Aufbereitungsmaschine 2 sowie eine mit einer Förderschnecke versehene Granulieranlage 4 auf. Die Aufbereitungsmaschine 2 ist mit einem Einfülltrichter 1 versehen, welcher eine nichtdargestellte Rührwelle besitzt, die durch einen Antrieb 12 in Drehung versetzt wird. Die Aufbereitungsanlage 2 weist eine Antriebseinheit 9 mit Getriebe zum Antrieb der Misch- und Knetvorrichtung auf, wobei der Antriebsmotor der Antriebseinheit 9 separat dargestellt und mit 8 bezeichnet ist. Die dem Trichter 1 aufgegebene Vormischung wird in der Aufbereitungsmaschine 2 homogenisiert. Die nähere Ausbildung von geeigneten Aufbereitungseinheiten mit ihren Beschickungsmöglichkeiten und weiteren Einzelheiten sind die in den CH-A-512 979, 519 013 und 577 372 beschriebenen Kneterkonstruktionen. Es könnten aber auch andere kontinuierlich arbeitende Aufbereitungsmaschinen Verwendung finden, die sich für die Homogenisierung eignen.

Die Ausgangsseite der Aufbereitungsmaschine 2 steht mit Hilfe eines Verbindungsschachtes 3 mit dem Eingang der Granulieranlage in Verbindung. Die Anordnung ist dabei so getroffen, dass das aus der Aufbereitungsmaschine 2 ausgestossene aufbereitete Material im freien Fall durch den Verbindungsschacht 3 in den Einlauf der Granulieranlage 4 gelangt. In diesem Verbindungsschacht 3 erfolgt die Entfernung der flüchtigen Bestandteile durch Absaugen, wie dies später noch beschrieben wird. Das aufbereitete Material gelangt in die Granulieranlage 4 und wird praktisch drucklos durch die Granulieranlage bis zu einer diese abschliessenden Lochplattendüse 24 gefördert und durch die ringförmig angeordnete Düsenlöcher gestrichen, worauf es zu Granulat geschnitten wird. Die Granulieranlage 4 ist mit einem Auffanggehäuse 5 versehen, welches in eine pneumatische Förderleitung 7 mündet. Die ganze Granulieranlage 4 ist auf einem Fundament 21 angeordnet und wird mittels eines Motors 10, mittels eines Untersetzungsgetriebes 11, angetrieben. Alle Antriebe sind regelbar ausgebildet.

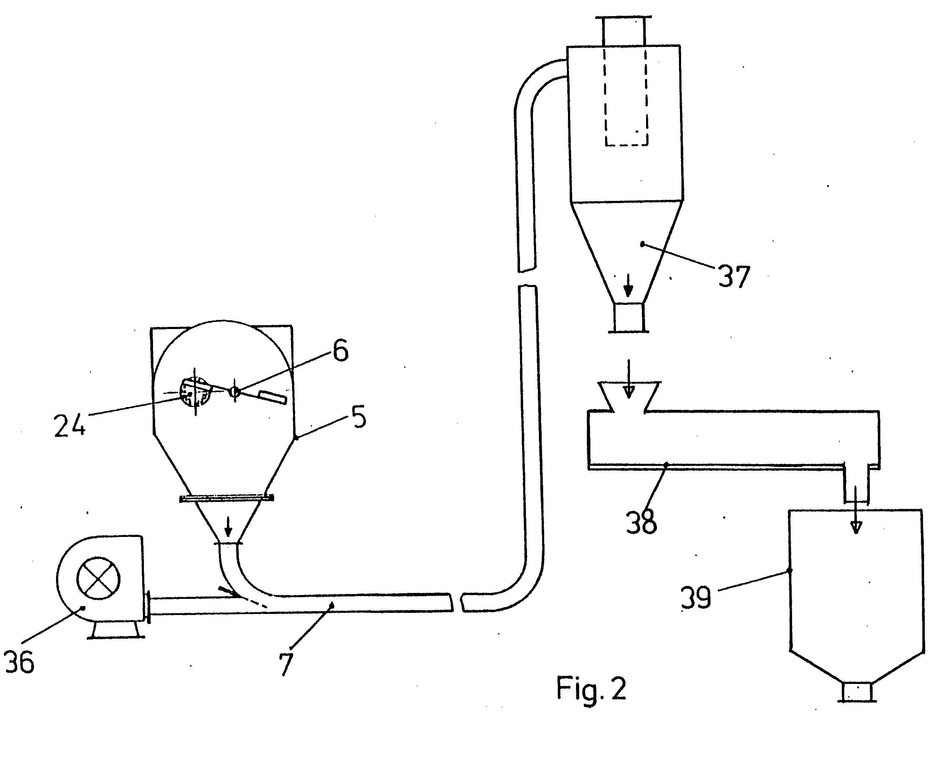

Die Lochplattendüse 24 ist mit einer rotierenden Schneideinrichtung 6 versehen, wie dies aus der Fig. 2 hervorgeht. Die Schneideinrichtung ist im Auffanggehäuse 5 angeordnet, welches mit Hilfe der pneumatischen Förderleitung 7 mit einem Abschneider 37 in Verbindung steht, an welchem zweckmässigerweise eine Kühlstrecke 38 angeschlossen ist, die in einem Silo 39 mündet. Das mit Hilfe der Schneideeinrichtung 6 abgetrennte Granulat gelangt durch das Auffanggehäuse 5 in die Förderleitung 7 und wird im Abscheider 37 vom Luftstrom getrennt. Mit 36 ist ein an die Förderleitung 7 angeschlossenes Gebläse bezeichnet.

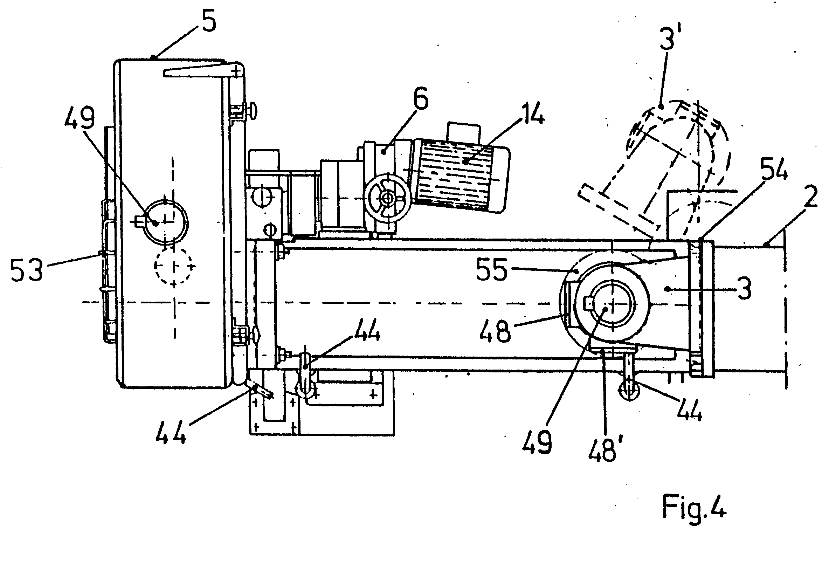

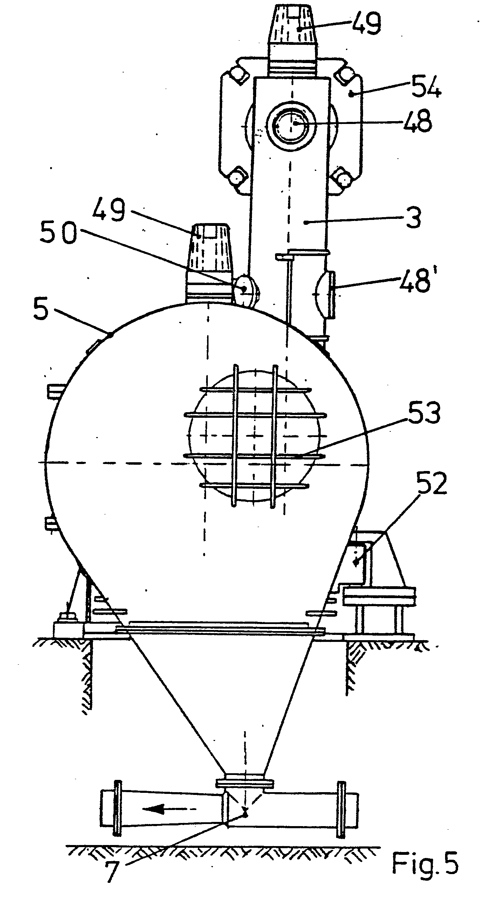

Die nähere Ausbildung der Granulieranlage 4 ist aus den Fig. 3–5 ersichtlich. Die Austrittseite der Aufbereitungsmaschine 2 ist mit einem Verbindungsflansch 54 versehen und mit Hilfe dieses Flansches ist der Verbindungsschacht 3 mit vier Verbindungs-Klappschrauben angeschlossen. Gegenüber der Anschlussstelle ist ein Schauglas 48 angeordnet, durch welches der Austritt des Knetgutes aus der Aufbereitungsmaschine beobachtet werden kann, wobei der Innenraum mittels einer Leuchte 49 ausgeleuchtet wird. Das aufbereitete Produkt durchwandert im freien Fall den Verbindungsschacht 3 und führt zur Granulieranlage 4. Der Schacht 3 ist mit Hilfe einer Flanschverbindung 55 an das Gehäuse der Granulieranlage angeschlossen. An einem seitlich angebauten Anschlussstutzen 50 kann bei Bedarf eine flexible Gasabsaugleitung installiert werden. Seitlich am Verbindungsschacht 3 ist ein Doppel-Gelenkhebel 51 angebaut, welcher an der Kneter-Grundplatte montiert ist. Auf diesem Gelenkhebel 51 kann der Schacht 3 in die Stellung 3' ausgeschwenkt werden. Im unteren Teil des Verbindungsschachtes 3 ist ferner ein weiteres Schauglas 48' angeordnet, durch welches das Niveau des Materials beobachtet werden kann. Wird das anfallende Material in der Granulieranlage nicht verarbeitet, so kann ein Ansteigen desselben im Schauglas 48' beobachtet werden. Wird ein Ansteigen festgestellt, so ist die Drehzahl der Schnecke der Granulieranlage dem Durchsatz entsprechend zu ändern. Es ist auch möglich, an den Schacht einen Messfühler einzubauen, wel-

cher bei einem Hochsteigen des Materials ein Signal auslöst.

Die Granulieranlage 4 weist ein in der Horizontalebene getrenntes, zweiteiliges Schneckengehäuse auf, wobei der Gehäuseoberteil 17 und der Gehäuseunterteil 18 zusammengeflanscht und mit je einem Mantel 19, 19' für ein Heiz- oder Kühlmedium ausgerüstet sind. Zu- und Abführleitungen 44 dienen für die Zu- und Ableitungen des Mediums. Die Anordnung ist so getroffen, dass der Gehäuseoberteil 17 nach Trennen der Zu- und Ableitungen 44 und nach Lösen von Schraubenverbindungen an Aufhängeösen befestigt und mittels Hebezeug abgehoben werden kann. Der Gehäuseunterteil 18 ist mittels Einstellschrauben auf dem Fundament 21 abgestützt. Das Auffanggehäuse 5 mit der Schneideinrichtung 6 und deren mit Verstellknopf 47 regelbarer Getriebemotor 14, welcher die Messerwelle 45 antreibt, ist durch den Schwenkhebel 52 mit der Grundplatte des Fundaments 21 verbunden.

Das Innere des Schneckengehäuses weist eine spezielle Ausbildung auf. Die Innenwand des Gehäuseober- und Unterteils 17 und 18 ist mit breiten Längszügen 23 versehen, die durch schmale Stegleisten 22 voneinander getrennt sind. Die Breite der Stegleisten 22 ist kleiner als die Tiefe der Längszüge 23. Im Gegensatz zu den für Druckaufbau bekannten, nur im Einlaufteil von Schneckengehäusen angebrachten, nichtdurchgehenden schmalen und wenig tiefen Nuten verhindern die tiefen und breiten Züge einen unzulässigen Druckaufbau im Gehäuse, wodurch die Schubwirkung der Schneckenwelle erhöht und ein Mitdrehen des verarbeiteten Materials verhindert wird. Dies ist besonders wichtig, da die bei einem Mitdrehen entstehende Reibung und die dadurch bewirkte Erwärmung ein rasches Aushärten des Materials bewirken würde. Die Züge im Gehäuse stellen eine Verankerung für das Material dar und die Schubförderung kann mit dem Verschieben einer Mutter auf einer sich drehenden Schraube verglichen werden.

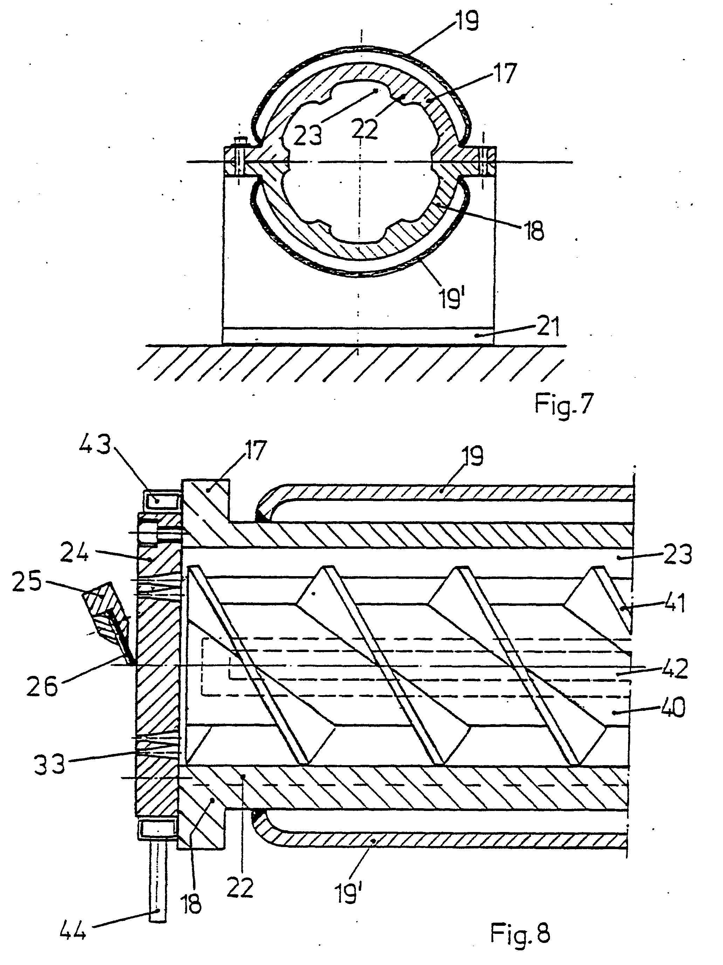

Aus der Fig. 8 ist die Schneckenwelle 40 mit Schneckengang 41 ersichtlich. Die genannte Welle weist Bohrungen zum Zuführen eines Temperiermediums über ein Heizrohr 42 mit eingeschraubtem Roto-Speisekopf auf. Um die Demontage der Welle 40 zu erleichtern, ist das Heizrohrbündel beim Schneckenwellenflansch trennbar ausgebildet. Der nichtgezeigte Roto-Speisekopf mit der Zu- und Ableitung ist am Ende der Welle 40 angeordnet. Auf der vorderen Fundamentplatte des Schneckengehäuses ist eine Schwenkvorrichtung 52 vorgesehen, mittels welcher die Granulieranlage zu Reinigungszwecken seitswärts ausgeschwenkt werden kann.

Zum Abschluss des Schneckengehäuses ist die Lochplattendüse 24 mit Düsenlöchern 33 angeordnet. Auf der Aussenseite der Lochplattendüse ist ein Messer 26 auf einem Messerarm 25 angeordnet. Zur Temperierung der Lochplattendüse 24 ist dieselbe mit einem Heizring 43 ausgerüstet, welcher eine Leitung 44 für das Heizmedium besitzt. Es sei noch erwähnt, dass die Schneckenwelle 40 nur eine Steigung von 0,5 D aufweist und herangeschobenes Material durch die Kante des umlaufenden Schneckenganges 41 durch die Düsenlöcher 33 gestrichen wird. Das Material wird also praktisch ohne unzulässigen Druck durch die Düsenlöcher geleitet. In dieser Weise können alle weich- bis zähplastischen Materialien bearbeitet werden, welche nach dem Austritt durch die Düsenlöcher 33 wenigstens an ihrer Oberfläche verspröden und hart werden, so dass anschliessend eine pneumatische Förderung derselben möglich ist. Ferner können die Materialien in einem fliessenden Medium aufgefangen und weitergeschwemmt werden.

Durch die vollkommen geschlossene Bauart der Anlageteile kann ein Luftzutritt wirksam verhindert werden bis das Material aus den Düsenlöchern hervortritt. Dies ist bei kalt plastisch homogenisierten Gemischen wichtig, mit Zusätzen, welche bei Luftkontakt eine fast sofortige Erstarrung herbeiführen.

Ausser dem Stutzen 50 am Verbindungsschacht 3 sind weitere Anschlussmöglichkeiten zur Zuführung eines Inertgases an der Aufbereitungsmaschine vorhanden. In diesem Falle wird das Luftgitter 53 am Auffanggehäuse 5 geschlossen und die pneumatische Förderung erfolgt mit Inertgas, welches in geschlossenem Kreislauf geführt wird.

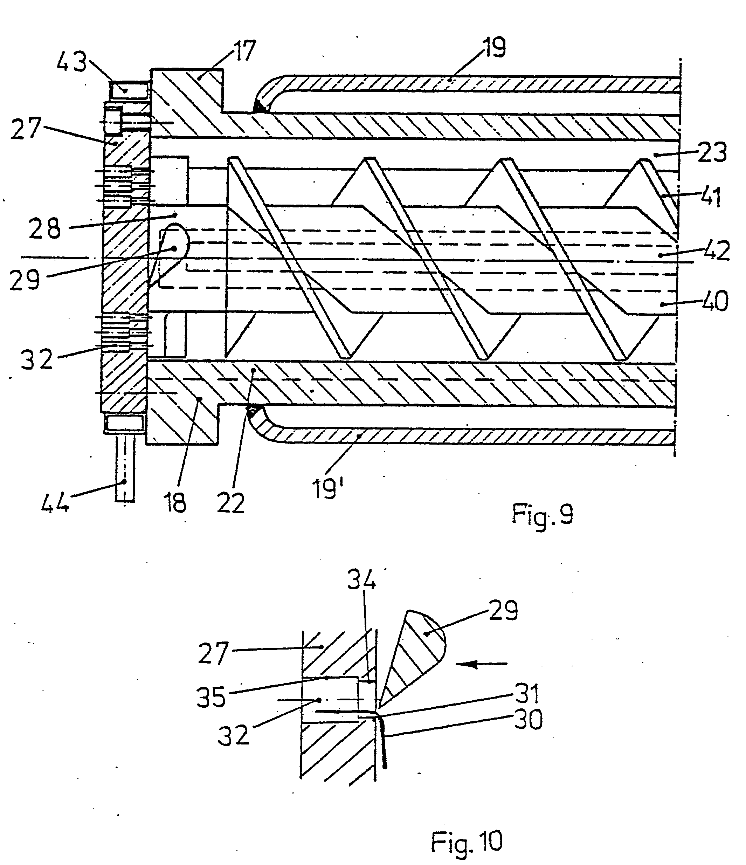

In den Fig. 9 und 10 ist eine Variante der Granulieranlage dargestellt. An Stelle des rasch umlaufenden Messers für den Abschlag an der Austrittseite der Düsenplatte wird hier eine Düsenplatte 27 für Innenschnitt verwendet. Am Ende der Schneckenwelle 40 wird ein Ring 28 mit Messern 29 mitdrehend montiert, wobei die Messer 29 durch das herangeförderte Material bis gegen die Innenseite der Düsenplatte 27 gedrückt werden. Die Messer 29 bewirken in dem Material, welches durch die Düsenlöcher 32 geschoben wird, einen trennenden Schnitt, der in den hervortretenden Strängen angerissene Soll-Bruchstellen hinterlässt. Dadurch brechen die Materialstränge nach Verlassen der Lochplattendüse von selbst in regelmässige Stücke. Diese Ausführung ist besonders wichtig für Materialien, die mit langfaserigen Füllstoffen vermischt homogenisiert wurden. Sollten sich in den Düsenbohrungen langfaserige Füllstoffschnitzel verfangen, dann werden sie durch die rotierenden Messer 29 durchgetrennt. Da bei konisch angelegten Düsenlöchern 33 der Lochplattendüse 24 dieser Schnitt nicht möglich ist, da das Messer 29 keiner definierten Schnittkante begegnen würde, sind die Düsenlöcher 32 der Düsenplatte 27 so ausgeführt, wie dies aus der Fig. 10 ersichtlich ist. Das Düsenloch 32 hat kurze Düsenlippen 34 als Materialführung. Diese bilden Kanten 31 für den Innenschnitt und ermöglichen ein Durchtrennen der Faser 30. Auf der Austrittseite ist das Düsenloch durch eine Gegenbohrung 35 ausgeweitet.

Von den vielen Mischungen, für deren Stückigmachung das vorgeschlagene Verfahren vorteilhaft eingesetzt werden kann, werden nachfolgend Beispiele beschrieben, bei welchen die Aufbereitung und Stückigmachung bekannterweise schwierig ist und welche nach der Homogenisierung besonders wärme- und druckempfindlich sind, wodurch nicht nur eine rasche Härtung beschleunigt, sondern auch eine unerwünschte Weitervernetzung gefördert wird. Zudem ist von diesen Mischungen bekannt, dass sie bisher nicht erfolgreich mit grösserem Durchsatz auf einer Schnecke kontinuierlich granuliert werden konnten, wobei unter kontinuierlich der störungsfreie Lauf während einer Acht-Stunden-Schicht zu verstehen ist.

Beispiel 1

In den Einfülltrichter 1 des als Aufbereitungsmaschine 2 dienenden Kneters von 140 mm Nenndurchmesser und 7 L/D Länge wird eine Vormischung aus ungesättigten Polyester-Harz, Füllstoffen/bzw. Kreide, Additiven, Härter usw. aufgegeben und in bekannter Weise verknetet, homogenisiert und über eine Schneckennutendüse bei 90 °C in den Verbindungsschacht ausgestossen. Der Durchsatz beträgt 400 kg/h und fällt in den Einzug der Förderschnecke der Granulieranlage 4 mit Welle von 4,5 D Länge eingängig, mit 0,5 D Steigung und Durchmesser 180 mm, die mit 50 °C temperiert ist. Die Mäntel 19, 19′ des Gehäuses werden auf 70 °C temperiert. Durch die Lochplattendüse 24 mit 190 Löchern von 3,6 mm Durchmesser tritt das Material in Strängen aus und wird durch das rasch rotierende Messer 26 abgeschlagen. Im allgemeinen werden Düsenlöcher mit Durchmesser zwischen 2–5 mm verwendet. Die feine Lochung ist besonders dann erwünscht, wenn zur Weiterverarbeitung kleine Spritzgussmaschinen eingesetzt werden, deren kleiner Wellendurchmesser ein gröberes Granulat nur schwer oder gar nicht einzuziehen vermag. Die eingesetzte Förderschnecke ist eingängig, es wäre aber möglich, mehrgängige Schnecken einzusetzen, wobei die Steigung entsprechend angepasst sein muss. So hat beispielsweise eine zweigängige Förderschnecke eine Steigung von 1 D.

Die Lochplattendüse 24 wird durch den Heizring 43 mit Zulauf von 100 °C so temperiert, dass einerseits die optimalen Fliesseigenschaften des Materials in den Düsenbohrungen 33 aufrechterhalten bleiben, anderseits das Material nach Verlassen der Düse im Luftstrom sofort oberflächlich versprödet, so dass es pneumatisch gefördert werden kann. Es ist im Kern noch weich und gelangt daher aus dem Abscheider 37 im freien Fall auf die Kühlstrecke 38. Der Versprödungsbereich für die Mischung erstreckt sich von 50 bis zu 30 °C. Das kleinstückige Granulat eignet sich auch gut für die Beschickung von Transferpressen. Auch für die Herstellung von feinkörnigen Pressmassen mit geringem Staubanteil ist das Granulat vorteilhaft, denn seine regelmässige Form erlaubt es, die Spaltweite einer Mahlanlage optimal einzustellen.

Beispiel 2

Hier wird eine Vormischung aus Phenolharz-Baumwollfasern, Additiven und Härter dosiert in den Einlauf einer Knetmaschine aufgegeben und verlässt das Gehäuseende mit freiem Austritt ungefähr 115 °C warm. Der Strang fällt frei durch den Verbindungsschacht 3 in den Einlauf der Granulieranlage 4, welche als Förderschnecke ausgebildet ist. Diese hat 4,5 L/D Länge bei 0,5 D Steigung und 180 mm Nenndurchmesser. Die Schnecke 40 wird mit 70 °C und der Heizring 43 mit 100 °C temperiert. Die Schneckenwelle 40 dreht mit 20 U./ min. Die Düsenplatte 24 hat 250 Löcher von 3,6 mm Durchmesser. Die Stränge ergeben nach dem Austritt durch die Lochplattendüse ein regelmässiges Granulat, welches pneumatisch zur Kühlstrecke 38 gefördert wird. Der Durchsatz beträgt 350 kg/h.

Weitere Vorteile des beschriebenen Verfahrens liegen in der weniger Lärm erzeugenden Aufbereitung und Herstellung von kleinstückigem Granulat, da gegenüber herkömmlichen Prozessen keine lärmenden Brech- und Mahlanlagen eingesetzt wurden. Ausserdem dreht die Förderschnecke 4 als Langsamläufer; die Antriebsgeräusche liegen daher im günstigen Bereich der Geräuschfrequenzen.

**Patentansprüche**

1. Einrichtung zur kontinuierlichen staubfreien Herstellung von kleinen Teilen mit regelmässiger Stückgrösse aus Mischungen, die nach ihrer Homogenisierung rasch hart werden, welche Einrichtung eine Aufbereitungsmaschine (2) und eine örtlich getrennte Granulieranlage (4) aufweist, die eine in einem heiz- und kühlbaren Gehäuse (17, 18) angeordnete heiz- und kühlbare Förderschnecke (40, 41) sowie eine Lochplattendüse (24) mit Schneidvorrichtung (6) besitzt, wobei die Länge L der Förderschnecke 3- bis 5mal dem Durchmesser D derselben entspricht und die Umdrehungszahl der Förderschnecke (40, 41) 10–25 pro Minute beträgt, dadurch gekennzeichnet, dass die Förderschnecke (40, 41) welche eine Steigung des Schneckenganges von ca. 0,5 D aufweist und einen im Verhältnis zum Aussendurchmesser dicken Kern besitzt, in einem durch Stegleisten (22) in Längszüge (23) unterteilten Gehäuse (17, 18) angeordnet ist, in welchem die Breite der Stegleisten (22) kleiner als die Tiefe der Längszüge ist, wobei an die Granulieranlage (4) eine Förderleitung (7) mit Abscheider (37) zur pneumatischen Förderung des Granulates angeschlossen ist, und wobei auch die Lochplattendüse (24) mit Heiz- und Kühleinrichtungen versehen ist.

2. Einrichtung nach Anspruch 1, dadurch gekennzeichnet, dass der Schneckendurchmesser jeweils an die der Schneckenwelle (40) zugewandte Fläche der Stegleisten (22) heranreicht und die Schneckenspitze mit kleinem Abstand bis zur Lochplattendüse (24) oder zu den innen umlaufenden Schneidmessern (26) herangeführt und eben abgeschnitten ist.

3. Einrichtung nach den Ansprüchen 1 und 2, dadurch gekennzeichnet, dass zum Absaugen von flüchtigen Bestandteilen der einen Schacht (3) im freien Fall durchwandernden Produkte in Verbindung mit dem Schacht (3) mindestens ein Ventilator angeordnet ist.

## Claims

1. Apparatus for the continuous dust-free production of small pieces with uniform piece size from mixes which, after their homogenization, rapidly become hard, which apparatus has a preparation machine (2) and a locally separate pelletizing unit (4) which has a heatable and coolable conveyor screw (40, 41) arranged in a heatable and coolable housing (17, 18) and also a multi-hole die-plate (24) with cutting device (6), the length L of the conveyor screw corresponding to 3 to 5 times the diameter D thereof and the number of revolutions of the conveyor screw (40, 41) amounting to 10 to 25 per minute, characterised in that the conveyor screw (40, 41), which has a pitch of the screw thread of about 0.5 D and has a thick core in relation to the outer diameter, is arranged in a housing (17, 18) divided up by web ridges (22) into longitudinal channels (23), in which housing the width of the web ridges (22) is smaller than the depth of the longitudinal grooves, a feed duct (7) with separator (37) for the pneumatic feed of the pellets being connected up to the pelletizing unit (4), and the multi-hole die-plate (24) also being provided with heating and cooling devices.

2. Apparatus according to claim 1, characterised in that the screw diameter extends respectively up to the surfaces of the respective web strips (22) facing the screw shaft (40) and the tip of the screw is cut off flat and extends as far as a small distance from the multi-hole die-plate (24) or from the internal rotating cutting knives (26).

3. Apparatus according to claims 1 and 2, characterised in that for the exhaustion of volatile constitutes of the products, which pass through a chute (3) in free fall, at least one fan is arranged in connection with the chute (3).

## Revendications

1. Dispositif pour la fabrication en continu et sans dégagement de poussiéres de petites pièces d'une grosseur individuelle régulière à partir de mélanges durcissant rapidement après leur homogénéisation, ce dispositif comportant une machine de traitement (2) et une installation de granulation (4) séparée localement et comportant une vis sans fin de transport (40, 41) pouvant être chauffée et refroidie et disposée dans un logement (17, 18) pouvant également être chauffé et refroidi, de même qu'une filière à plaque perforée (24) pourvue d'un dispositif de découpage (6), la longueur L de la vis sans fin de transport correspondant à 3–5 fois son diamètre D, tandis que la vitesse de rotation de cette vis sans fin de transport (40, 41) est de 10–25 tours/minute, caractérisé en ce que la vis sans fin de transport (40, 41) dont le pas est d'environ 0,5 D et qui comporte un noyau épais par rapport à son diamètre extérieur, est disposée dans un logement (17, 18) subdivisè en canaux longitudinaux (23) par des nervures longitudinales (22), logement dans lequel la largeur des nervures longitudinales (22) est inférieure à la profondeur des canaux longitudinaux, une conduite de transport (7) pourvue d'un séparateur (37) pour le transport pneumatique des granulés étant raccordée à l'installation de granulation (4), tandis que la filière à plaque perforée (24) est équipée de dispositifs de chauffage et de refroidissement.

2. Dispositif suivant la revendication 1, caractérisé en ce que le diamètre de la vis sans fin se rapproche chaque fois de la face des nervures longitudinales (22) qui est tournée vers l'arbre (40) de cette vis sans fin, tandis que la pointe de cette dernière se dirige avec un faible écartement vers la filière à plaque perforée (24) ou vers les lames de découpage (26) tournant à l'intérieur, cette pointe comportant une découpe plane.

3. Dispositif suivant les revendications 1 et 2, caractérisé en ce qu'au moins un ventilateur est associé à une cuve (3) en vue d'aspirer les constituants volatils des produits circulant en chute libre à travers cette cuve (3).

Fig.1

Fig. 2

Fig. 3

Fig.4

Fig.5

Fig.6

Fig.7

Fig.8

Fig. 9

Fig. 10